# EUROPÄISCHE PATENTANMELDUNG

(11) **EP 1 084 920 A2**
(43) Veröffentlichungstag der Anmeldung: **21.03.2001**
(21) Anmeldenummer: 00119251.7
(22) Anmeldetag: 06.09.2000
(51) Int. Cl.: B60S 1/50

(54) **Vorratsbehälter für Scheiben- und/oder Scheinwerfer-Reinigungsanlagen für Kraftfahrzeuge**

(30) Priorität: 18.09.1999 DE 19944881
(71) Anmelder: Volkswagen Aktiengesellschaft, 38436 Wolfsburg (DE)
(72) Erfinder: Machalitza, Andreas, 38102 Braunschweig (DE)

(57) **Zusammenfassung**

Die Erfindung betrifft einen Vorratsbehälter für Scheiben- und/oder Scheinwerfer-Reinigungsanlagen für Kraftfahrzeuge. Der Vorratsbehälter hat einen Zulauf, einen Auslauf, wenigstens eine Pumpe sowie Befestigungspunkte. Mindestens ein Befestigungspunkt (25) ist nach Art einer Lasche ausgebildet. Die Lasche (251) korrespondiert mit einem an dem Kraftfahrzeug angeordneten Stift (254). Der Stift (254) ist mit der Lasche (251) verrastbar.

## Beschreibung

Die Erfindung betrifft einen Vorratsbehälter für Scheiben- und/oder Scheinwerfer-Reinigungsanlagen für Kraftfahrzeuge mit einem Zulauf, einem Auslauf, wenigstens einer Pumpe sowie Befestigungspunkten.

Anlagen für die Reinigung von Scheiben bzw. Scheinwerfern haben die Aufgabe, die Scheiben bzw. Scheinwerfer von Verunreinigungen zu säubern um somit eine Beeinträchtigung der Sicht bzw. der Leuchtstärke zu verhindern. Bei der Reinigung von Scheiben kommt grundsätzlich eine Kombination von Wischeranlagen mit Waschanlagen zur Anwendung. Die Wischeranlagen bestehen dabei aus einem Gestänge, das mit Hilfe eines Motors und eines Getriebes in eine möglichst gleichmäßige Wischbewegung versetzt wird. Die Wischeranlagen sind mit Wischblättern versehen, auf deren der Scheibe zugewandten Seite jeweils Wischgummis angeordnet sind, welche über die Scheibe gezogen werden. Hauptaufgabe der Wischeranlage ist die Beseitigung von Wasser, Schnee und Schmutz. Grundsätzlich gilt das Gesagte auch für Wischeranlagen bei Scheinwerfer-Reinigungsanlagen. Hierbei können jedoch auch anstelle von Wischergummis Bürsten vorgesehen sein.

Anders als bei Wischeranlagen zur Scheibenreinigung ist bei Scheinwerfer-Reinigungsanlagen eine Waschanlage nicht unbedingt erforderlich, beispielsweise besteht bei Scheinwerfer-Reinigungsanlagen auch die Möglichkeit die Scheinwerfer allein über den Wasserdruck zu reinigen.

Bei Waschanlagen werden elektrisch angetriebene Kreiselpumpen verwendet, die Wasser - eventuell mit Reinigungszusatz - über Düsen auf die Scheiben bzw. die Scheinwerfer auftragen. Sowohl bei Waschanlagen für Scheiben als auch bei Anlagen für Scheinwerfer ist die richtige Anordnung der Düsen wichtig, so dass die Scheiben bzw. die Scheinwerfer bei allen Fahrgeschwindigkeiten gut vom Reinigungsstrahl getroffen werden. Das zur Reinigung benötigte Wasser wird in einem Vorratsbehälter bevorratet, dessen Füllvolumen abhängig von der Anzahl der Reinigungszyklen ist. Ist beispielsweise nur eine Scheiben-Reinigungsanlage an dem jeweiligen Fahrzeug vorgesehen beträgt der Inhalt des Vorratsbehälters üblicherweise 1,5 bis 3 Liter. Werden aus demselben Behälter auch die Scheinwerfer gereinigt, so wächst der Inhalt auf 5 bis 7 Liter an.

Die Vorratsbehälter für Reinigungsanlagen sind in der Regel im Motorraum, Kotflügel, Stoßfänger oder sonstigen Hohlräumen des jeweiligen Fahrzeugs angeordnet. Aufgrund der beengten Platzverhältnisse ist die Anordnung oftmals schwierig. Um eine Anpassung an die räumlichen Gegebenheiten sowie die Motor- und Karosserieform zu erzielen, weisen die Vorratsbehälter eine komplizierte bzw. komplexe Form auf. Um die Anpassung optimal zu ermöglichen, sind die Behälter üblicherweise aus Kunststoff mit Hilfe eines Blasverfahrens hergestellt.

Aufgrund der beengten Raumverhältnisse ist das Auffinden eine Hohlraumes für einen Vorratsbehälter und die Anbringung desselben oft schwierig. Um dennoch einen weiteren Vorratsbehälter vorsehen zu können, ist es unter anderem bekannt, den Vorratsbehälter im Außenkotflügel des Fahrzeugs anzuordnen. Der Behälter muss in diesem Fall von unten in den Kotflügel eingebaut werden. Für den Fall, dass bei der Montage des Fahrzeugs dieses auf dem Montageband 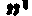 hochgefahren" ist, also die Montage im sogenannten 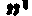 Hochtakt" erfolgt, stellt dies kein Problem dar. Ist jedoch ein 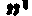 Hochfahren" des Fahrzeugs in der Montagestation, in der der zusätzliche Vorratsbehälter installiert wird, nicht vorgesehen - Einbau im Tieftakt -, treten für den Monteur erhebliche Probleme auf, da der Monteur allein auf seinen Tastsinn sich verlassend - also 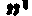 blind" - den Vorratsbehälter installieren und festschrauben muss. Dies ist bei den bekannten Befestigungseinrichtungen für Vorratsbehälter sehr schwierig, umständlich und bedarf zudem eines erhöhten Zeitaufwandes.

Hier will die Erfindung Abhilfe schaffen. Der Erfindung liegt die Aufgabe zugrunde, einen Vorratsbehälter für Scheiben- und/oder Scheinwerfer-Reinigungsanlagen für Kraftfahrzeuge zu schaffen, der im Tieftakt im Außenkotflügel auf einfache Weise montierbar ist. Gemäß der Erfindung wird diese Aufgabe dadurch gelöst, dass mindestens ein Befestigungspunkt nach Art einer Lasche ausgebildet ist, die mit einem an dem Fahrzeug angeordneten Stift korrespondiert und mit dem die Lasche verrastbar ist.

Mit der Erfindung ist ein Vorratsbehälter für Scheiben- und/oder Scheinwerfer-Reinigungsanlagen für Kraftfahrzeuge geschaffen, der im Tieftakt auf einfache Weise zum Beispiel im Kotflügelbereich oder sonstigen verdeckten Einbauorten montierbar ist. Hierzu bedarf es allein des Einsetzens des Behälters in den Hohlraum und Einrasten des Stiftes in die Lasche. Auf diese Weise ist eine genau fixierte Positionierung und 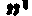 blinde" Montagemöglichkeit des Behälters geschaffen. Die Endbefestigung kann dann auf einfache Art und Weise auf Sicht erfolgen.

In Weiterbildung der Erfindung ist die Lasche an der dem Boden abgewandten Seite des Behälters angeordnet. Durch diese Weiterbildung ist gewährleistet, dass der Behälter beim Einsetzen durch die Radhausöffnung nach oben in den zwischen Innen-und Außenkotflügel gebildeten Zwischenraum in den Stift einrastbar ist.

Vorteilhaft weist die Lasche auf ihrer dem Behälter abgewandten Seite eine im wesentlichen V-förmige Ausbildung auf. Durch diese Ausbildung ist eine Art Einlauffläche an der Lasche ausgebildet, die das Einrasten des Stiftes mit der Lasche wesentlich vereinfacht.

In Ausgestaltung der Erfindung ist der Stift in Form eines T-Stiftes ausgebildet. Der T-Stift nimmt Axial-Kräfte auf. Durch die Form des Stiftes wird der Vorratsbehälter in Querrichtung zur Lasche lagefixiert.

Bevorzugt entspricht die Höhe des Stiftes der Wandstärke der Lasche. Hierdurch ist eine Fixierung des Behälters in Bezug zur Lasche erzielt, die die Montage zusätzlich vereinfacht.

Ein Ausführungsbeispiel der Erfindung ist in der Zeichnung dargestellt und wird nachfolgend beschrieben. Es zeigen:
- Figur 1: eine perspektivische Darstellung der Außenkontur eines Pkw mit Vorratsbehälter und Leitungsverlauf der Scheiben-Waschanlage;
- Figur 2: eine perspektivische Darstellung der Außenkontur des in Figur 1 dargestellten Pkw mit Vorratsbehälter und Leitungsverlauf der Scheinwerfer-Reinigungsanlage;
- Figur 3: die schematische Darstellung eines Ausschnitts aus dem Frontbereich des in Figur 1 dargestellten Fahrzeugs mit explosionsartig dargestelltem Vorratsbehälter;
- Figur 4: den Schnitt entlang der Linie A-A in Figur 3;
- Figur 5: den Schnitt entlang der Linie B-B in Figur 3;
- Figur 6: den Schnitt entlang der Linie C-C in Figur 3;
- Figur 7: einen Ausschnitt aus dem Vorderbau nach Figur 3 mit ausschnittsweise explosionsartig dargestellten Vorratsbehältern und
- Figur 8: eine Seitenansicht einer an einem Vorratsbehälter angeformten Lasche.

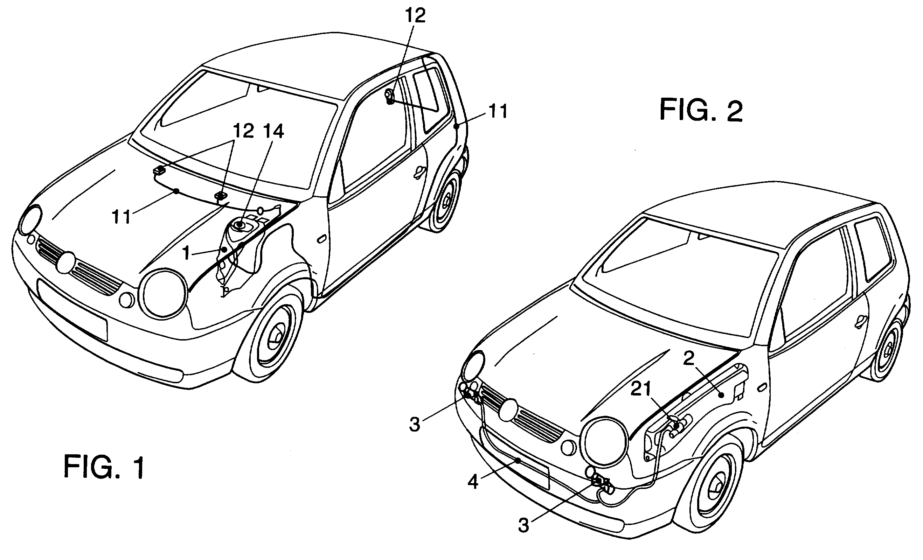

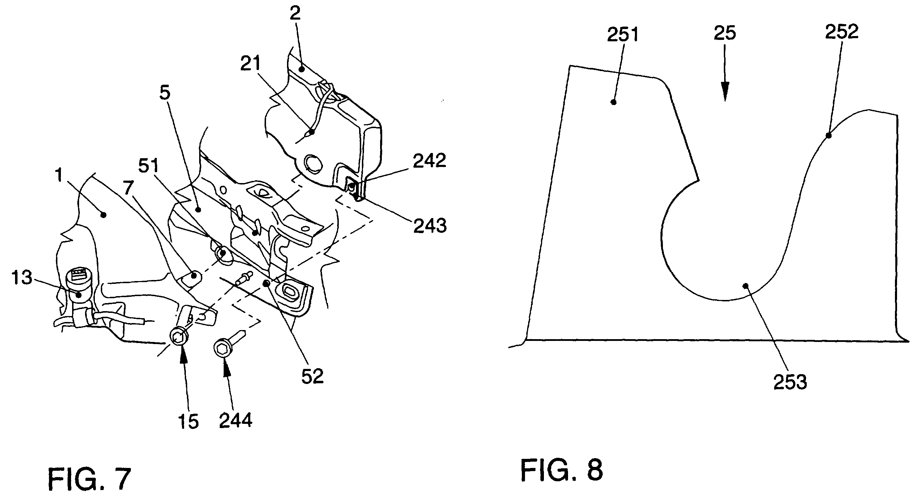

Das in Figur 1 dargestellte Kraftfahrzeug zeigt die Anordnung eines Vorratsbehälters 1 für eine Scheiben-Waschanlage. An dem Kraftfahrzeug ist eine Scheinwerfer-Reinigungsanlage optional vorsehbar. Der hierfür benötigte Vorratsbehälter 2 sowie die zu den Reinigungsdüsen 3 führenden Leitungen 4 sind in Figur 2 dargestellt. Der Vorratsbehälter 1 hat im Ausführungsbeispiel ein Fassungsvermögen von etwa 2 Litern; der Vorratsbehälter 2 ein Fassungsvermögen von ca. 5 Litern. Aufgrund der im Motorraum des dargestellten Kraftfahrzeugs herrschenden beengten Platzverhältnisse ist der Vorratsbehälter 2 in dem zwischen oberem Längsträger 5 und Außenkotflügel 6 ausgebildeten Zwischenraum oberhalb des Radhauses angeordnet. In montiertem Zustand sind die Behälter 1 und 2 mit Hilfe eines Überlaufstutzens 7, der durch ein im Rohbau angeordnetes Loch 51 ragt, miteinander verbunden (Figur 7).

Der Vorratsbehälter 1 für die Scheiben-Waschanlage steht über Leitungen 11 mit Düsen 12 sowohl für die Front- als auch für die Heckscheibe in Verbindung. Zur Betätigung der Scheiben-Wascheinrichtung ist an dem Behälter 1 eine Pumpe 13 angeordnet. Zum Befüllen des Vorratsbehälters 1 ist dieser auf seiner dem Boden abgewandten Seite mit einem Zulauf 14 in Form einer mit einem Deckel verschließbaren Einfüllöffnung versehen. Der Vorratsbehälter 1 ist mit Hilfe von Schrauben 15 am Rohbau befestigt.

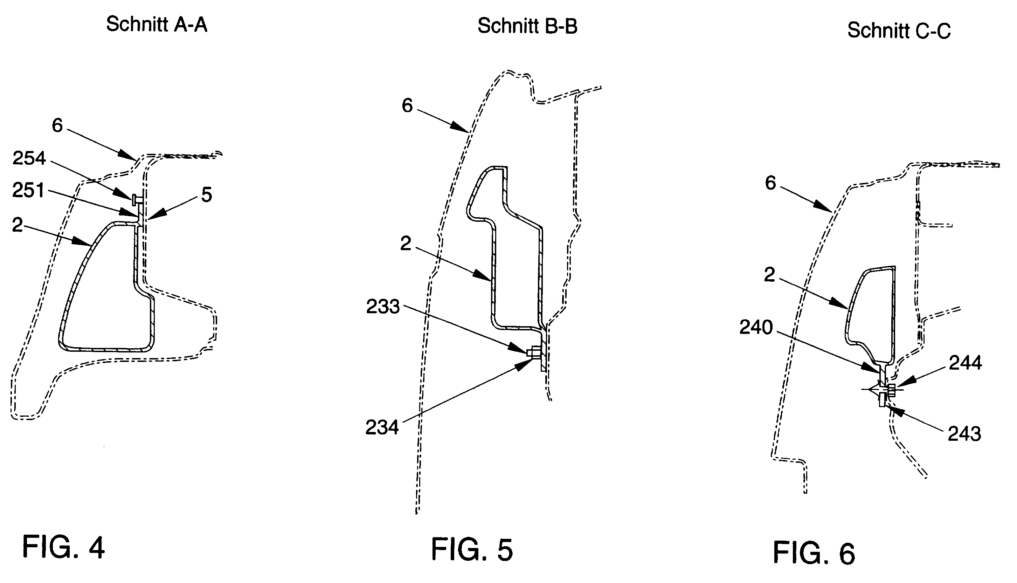

Der Vorratsbehälter 2 weist eine Pumpe 21 auf, die einerseits mittels einer Leitung 22 mit dem Inneren der Behälter verbunden ist, andererseits mit Hilfe der Leitung 4 die Düsen 3 der Scheinwerfer-Reinigungsanlage mit dem Behälter 2 verbindet. Der Vorratsbehälter 2 hat eine an einen Hohlraum im Rohbau angepasste Form. Solch ein Hohlraum kann zum Beispiel ein zwischen oberen Längsträger 5 und Kotflügel 6 zur Verfügung stehender Raum sein (Figuren 4 bis 6). Zur Befestigung an dem oberen Längsträger 5 sind im Ausführungsbeispiel drei Befestigungspunkte (23, 24 und 25) an dem Vorratsbehälter 2 vorgesehen.

Der erste Befestigungspunkt 23 ist von einem an dem Vorratsbehälter 2 angeformte Lasche 231 gebildet, in dem ein Loch 232 vorgesehen ist. Das Loch 232 korrespondiert mit einem an dem oberen Längsträger 5 angeordneten Gewindestift 233. Auf den Gewindestift 233 ist eine Sechskantmutter 234 aufgeschraubt.

Der zweite Befestigungspunkt 24 ist von einem in einer an dem Behälter 2 vorgesehenen ebenen Fläche 241 vorgesehenen Loch 242 gebildet. Das Loch 242 ist von einer Schnappmutter 243 umgeben. In die Schnappmutter 243 ist motorraumseitig eine Kombischraube 244 geschraubt, die durch ein im Rohbau bzw. Schließteil des Radhauses vorgesehenes Loch 52 gesteckt ist.

Der dritte Befestigungspunkt 25 des Vorratsbehälters 2 ist von einer Lasche 251 gebildet, die im Ausführungsbeispiel auf der dem Boden abgewandten Seite des Behälters angeformt ist. Die Lasche 251 weist auf ihrer dem Behälter 2 abgewandten Seite eine im wesentlichen V-förmige Ausbildung auf. Die V-förmige Ausbildung dient bei der Montage des Behälters als Einlauffläche. Die dem Befestigungspunkt 23 des Behälters 2 zugewandte Seite der V-förmigen Ausbildung ist nach Art eines Kreisabschnitts ausgeformt. Der Radius des Kreisabschnitts 252 entspricht dabei ungefähr dem Abstand zwischen Mittelpunkt der Lasche 251 und dem Mittelpunkt des Lochs 232 des Befestigungspunktes 23. Dabei ist die Lasche 251 im Einführbereich zusätzlich abgeflacht, um das Ergreifen des T-Stiftes zu erleichtern. An dem dem Behälter 2 zugewandten Ende der V-förmigen Ausbildung der Lasche 251 ist eine annähernd kreisförmige Aussparung 253 vorgesehen. Die Aussparung 253 dient der Aufnahme eines Stiftes 254, der am oberen Längsträger 5 angeordnet ist. Der Stift 254 ist hier in Form eines T-Stiftes ausgebildet. Der Abstand zwischen dem abgeflachten Kopf des T-Stiftes 254 und dem oberen Längsträger 5 - die Höhe des T-Stiftes - entspricht im Ausführungsbeispiel der Wandstärke der Lasche 251.

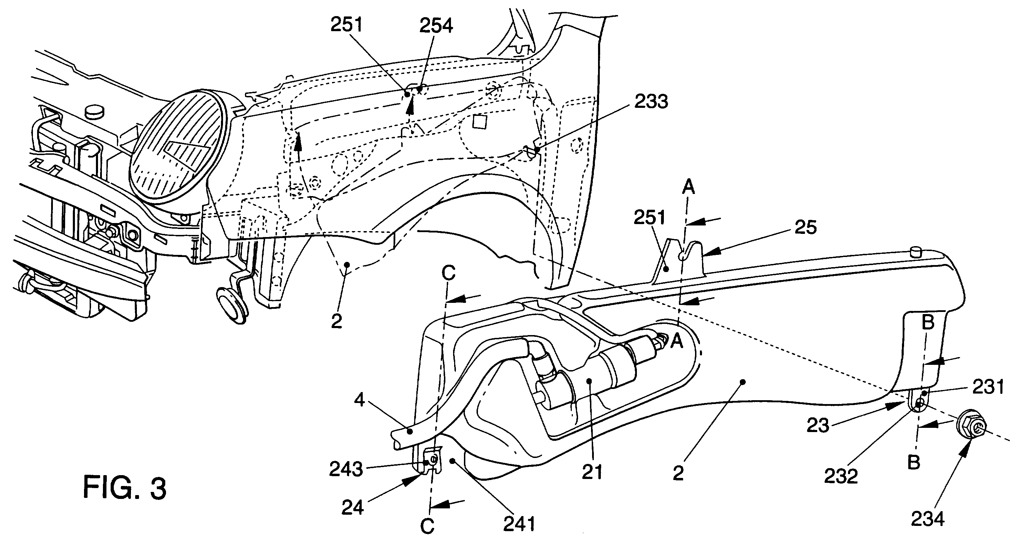

Die Montage des Vorratsbehälters 2 erfolgt auf dem Montageband aus fertigungstechnischen Gründen im Tieftakt. Das bedeutet, dass der Monteur während der Montage die Befestigungspunkte 23, 24 und 25 des Vorratsbehälters 2 nicht sehen kann. Die Montage erfolgt somit 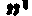 blind". Aufgrund der Ausbildung des Befestigungspunktes 25 braucht der Monteur bei der Montage nur den Gewindestift 233 des Befestigungspunktes 24 zu ertasten und den Stift 233 in das Loch 232 einzuführen. Nachdem der Vorratsbehälter 2 auf diese Weise einseitig fixiert ist, schwenkt der Monteur den Vorratsbehälter 2 um den Mittelpunkt des Lochs 232/Stiftes 233 nach oben (Figur 3). Aufgrund der Lage des T-Stiftes 254 erreicht die von dem Kreisabschnitt 252 an der Lasche 251 ausgebildete Einlauffläche beim Hochschwenken des Behälters 2 den Stift 254. Beim weiteren Hochschwenken des Behälters 2 passiert der Stift 254 die engste Stelle in der V-förmigen Ausbildung und erreicht seine Endposition in der Aussparung 253. In dieser Position ist der Stift 254 mit der Lasche 251 verrastet. Aufgrund der aufeinander abgestimmten Höhe des Stiftes 254 sowie der Wandstärke der Lasche 251 ist gleichzeitig eine Fixierung relativ zur Lasche erzielt. Der Behälter 2 kann jetzt mit Hilfe der Sechskantmutter 234 sowie der Kombischraube 244 mit dem oberen Längsträger 5 verschraubt werden. Zu einem späteren Montagezeitpunkt wird dann der Vorratsbehälter 1 in dem Motorraum eingebaut, wobei die Verbindung zwischen den Behältern 1 und 2 mit Hilfe des Überlaufstutzens 7 gebildet wird.

### BEZUGSZEICHENLISTE

- 1: Vorratsbehälter (Scheiben-Waschanlage)
- 2: Vorratsbehälter (Scheinwerfer-Waschanlage)
- 3: Düsen
- 4: Leitungen
- 5: oberer Längsträger
- 6: Kotflügel
- 7: Überlaufstutzen
- 11: Leitungen
- 12: Düsen
- 13: Pumpe
- 14: Zulauf
- 15: Schrauben
- 21: Pumpe
- 22: Leitung
- 23: Befestigungspunkt
- 231: Lasche
- 232: Loch
- 233: Gewindestift
- 234: Sechskantmutter
- 24: Befestigungspunkt
- 241: Fläche
- 242: Loch
- 243: Schnappmutter
- 244: Kombischraube
- 25: Befestigungspunkt
- 251: Lasche
- 252: Kreisabschnitt
- 253: Aussparung
- 254: Stift
- 51: Loch
- 52: Loch

## Patentansprüche

1. Vorratsbehälter für Scheiben- und/oder Scheinwerfer-Reinigungsanlagen für Kraftfahrzeuge mit eine Zulauf, einem Auslauf, wenigstens einer Pumpe sowie Befestigungspunkten, **dadurch gekennzeichnet**, dass mindestens ein Befestigungspunkt (25) nach Art einer Lasche (251) ausgebildet ist, die mit einem an dem Kraftfahrzeug angeordneten Stift (254) korrespondiert und mit dem die Lasche (251) verrastbar ist.

2. Vorratsbehälter nach Anspruch 1, **dadurch gekennzeichnet**, dass die Lasche (251) an der dem Boden abgewandten Seite des Behälters (2) angeordnet ist.

3. Vorratsbehälter nach Anspruch 1 oder 2, **dadurch gekennzeichnet**, dass die Lasche (251) auf ihrer dem Behälter (2) abgewandten Seite eine im wesentlichen V-förmige Ausbildung aufweist.

4. Vorratsbehälter nach einem der Ansprüche 1 bis 3, **dadurch gekennzeichnet**, dass die Lasche (251) mit einer Aussparung (253) versehen ist.

5. Vorratsbehälter nach einem der Ansprüche 1 bis 4, **dadurch gekennzeichnet**, dass der Stift (254) in Form eines T-Stiftes ausgebildet ist.

6. Vorratsbehälter nach Anspruch 5, **dadurch gekennzeichnet**, dass die Höhe des Stiftes (254) der Wandstärke der Lasche (251) entspricht.

7. Vorratsbehälter nach einem der Ansprüche 3 bis 6, **dadurch gekennzeichnet**, dass die dem Befestigungspunkt (23) zugewandte Seite der V-förmigen Ausbildung der Lasche (251) nach Art eines Kreisabschnitts (252) ausgeformt ist.
